# EUROPÄISCHE PATENTSCHRIFT

(11) **EP 2 112 479 B1**
(45) Veröffentlichungstag und Bekanntmachung des Hinweises auf die Patenterteilung: **01.05.2013**
(21) Anmeldenummer: 09009774.2
(22) Anmeldetag: 30.05.2003
(51) Int. Cl.: G01F 11/00, B01L 3/02, G01F 15/06, G01N 35/10, G01N 35/00

(54) **Verfahren zum Handhaben von Daten einer Dosiervorrichtung und Dosiervorrichtung geeignet zur Durchführung des Verfahrens**
Method for handling data of a dosing device and dosing device adapted to perform such method
Procédé de gestion de données d'un dispositif de dosage et dispositif de dosage pour la mise en oeuvre du procédé

(30) Priorität: 30.08.2002 DE 10239901
(43) Veröffentlichungstag der Anmeldung: 28.10.2009
(62) Teilanmeldung aus: 03012346.7
(73) Patentinhaber: EPPENDORF AG, 22339 Hamburg (DE)
(72) Erfinder: Mellenthin, Uwe, 22848 Norderstedt (DE); Garzmann, Peter, 22393 Hamburg (DE); Dreyer, Ralf, 24558 Henstedt-Ulzburg (DE); Paebst, Knut, 22417 Hamburg (DE)
(74) Vertreter: Hauck Patent- und Rechtsanwälte

(56) Entgegenhaltungen:
- EP-A- 0 999 432
- EP-A1- 0 994 350
- WO-A-02/090895
- WO-A1-01/62322
- DE-A1- 19 911 397

## Beschreibung

Die Erfindung bezieht sich auf ein Verfahren zum Handhaben von Daten einer tragbaren Pipette oder eines tragbaren Dispensers.

Dosiervorrichtungen im Sinne dieser Anmeldung sind manuell oder motorisch betriebene Pipetten oder Dispenser in tragbarer Ausführung. Bei der Herstellung dieser Dosiervorrichtungen fallen produktionsbezogene Daten an, die insbesondere den Auftrag, die individuelle Produktnummer, die Produktcharge und Qualitätssicherungsdaten umfassen. Zu den Qualitätssicherungsdaten gehören insbesondere die Daten der Erstkalibrierung des Herstellers. Diese produktionsbezogenen Daten werden herkömmlicherweise in Begleitdokumenten der Dosiervorrichtung festgehalten bzw. beim Hersteller archiviert. Zum Teil sind sie nur durch Auskunft des Herstellers zugänglich.

Bei der Anwendung fallen anwendungsbezogene Daten an, beispielsweise Inventarisierungsdaten oder Qualitätssicherungsdaten des Anwenders. Zu den Qualitätssicherungsdaten des Anwenders gehören insbesondere die Kalibrationsdaten für die Meßmittelüberwachung. Herkömmlicherweise werden diese Daten vom Anwender in Begleitdokumenten festgehalten. Zum Teil sind die Daten auf beschriebenen Etiketten an der Dosiervorrichtung angebracht.

Die bisherige Handhabung hat den Nachteil, daß der Zugriff auf die Daten sowie deren Aktualisierung und Ergänzung umständlich ist und die benötigten Daten nicht immer ohne weiteres zur Verfügung stehen.

EP 0 994 350 A1 beschreibt ein Zubehörteil zum chemischen oder elektrochemischen Messen oder Dosieren, das ein elektronisches Etikett aufweist. Das Etikett enthält in seinem Speicher charakteristische Kalibrierdaten des Zubehörteils. Der Inhalt des Speichers ist berührungslos über Funk durch einen Messswertumformer oder durch eine andere Steuerungseinrichtung, die einen Sender enthält, abfragbar.

WO01/62322 A1 beschreibt einen Medikamentendispenser mit einem Gehäuse, einem Medikamentenbehälter, einem Abgabemechanismus für die Abgabe eines Medikaments aus dem Medikamentenbehälter und einem RFID.

DE 199 11 397 A1 beschreibt ein hand- oder motorbetriebenes, autonomes, vorzugsweise tragbares Gerät zum Dosieren, Pipettieren oder Titrieren von Flüssigkeiten. Das Gerät hat eine Gerätesteuerung, eine Sensoreinrichtung zur Erfassung von Betriebsdaten und eine drahtlose Schnittstelle zur Datenübertragung und/oder eine drahtlose Schnittstelle zur Gerätesteuerung.

EP 0 999 432 A2 beschreibt ein Verfahren zum Betrieben eines elektronischen Dosiersystems mit einer elektronischen Handdosiervorrichtung, die einen elektrischen Antrieb, eine programmgesteuerte elektronische Steuer- und/oder Regeleinrichtung und einen Schreib-/Lese-Speicher aufweist. Das Dosiersystem weist eine Datenverarbeitungsanlage auf, mittels der über Datenschnittstellen Betriebsparameter und/oder Anwenderparameter und/oder Routinen und/oder das Programm und/oder Programmteile in den Speicher einschreibbar sind und/oder die Handdosiervorrichtung fernsteuerbar ist.

Davon ausgehend liegt der Erfindung die Aufgabe zugrunde, ein das Handhaben von Daten einer Pipette oder eines Dispensers vereinfachendes Verfahren zur Verfügung zu stellen.

Die Aufgabe wird durch ein Verfahren mit den Merkmalen des Anspruches 1 gelöst. Vorteilhafte Ausgestaltungen des Verfahrens sind in den Unteransprüchen angegeben.

Bei dem erfindungsgemäßen Verfahren zum Handhaben von Daten einer tragbaren Pipette oder eines tragbaren Dispensers
- wird die Pipette oder der Dispenser im Produktionsprozeß mit mindestens einem passiven RFID-Transponder versehen, in den Daten mittels einer Schreibeinrichtung berührungslos einspeicherbar und aus dem Daten mittels einer Lesceinrichtung berührungslos auslesbar sind,
- werden im Produktionsprozeß mittels einer Schreibeinrichtung produktionsbezogene spezifische Daten der Pipette oder des Dispensers in denpassiven RFID-Transponder eingespeichert und
- werden bei der Anwendung mittels einer Schreibeinrichtung anwendungsbezogene spezifische Daten der Pipette oder des Dispensers in den passiven RFID-Transponder eingespeichert Und
- werden als anwendungsbezogene spezifische Daten einen Fehler und/oder ein ausgetauschtes Teil beschreibende Reparaturdaten in den passiven RFID-Transponder eingespeichert.

Die Dosiervorrichtung umfaßt einen Transponder, in den produktionsbezogene spezifische Daten und anwendungsbezogene spezifische Daten der Dosiervorrichtung berührungslos einspeicherbar und aus dem diese Daten berührungslos auslesbar sind.

Die Erfindung ermöglicht das Speichern der produktionsbezogenen und der anwendungsbezogenen spezifischen Daten in der Dosiervorrichtung. Hierdurch wird eine Herstellung und Anwendung der Dosiervorrichtungen ohne Begleitdokumente, eine einfache Aktualisierbarkeit und Ergänzbarkeit der Daten mittels einer Schreibeinrichtung und eine einfache und vollständige Verfügbarkeit der Daten mittels einer Leseeinrichtung sichergestellt. Ferner wird durch die Speicherung der anwendungsbezogenen und produktionsbezogenen spezifischen Daten die Rückverfolgbarkeit des Produktes (Hersteller, Vertrieb, Anwender und Anwendungen, Wartung und Service) erleichtert. Ein weiterer Vorteil ist die einfache Auffindbarkeit einer gesuchten Dosiervorrichtung durch berührungsloses Auslesen spezifischer Daten durch Verpackungsmaterial etc. hindurch.

Geeignete Transponder sowie Schreib- und/oder Leseeinrichtungen stehen kostengünstig zur Verfügung. Eingesetzt werden RFID (Radio Frequency Identification)-Systeme bestehend aus einem Transponder in Form eines Mikrochips mit einer Antenne und einer mobilen bzw. stationären Schreib- und/oder Leseeinrichtung mit Antenne. Bei diesen Systemen erfolgt eine berührungslose Datenübertragung auf der Basis elektromagnetischer Wechselfelder. Damit sind RFID-Systeme in unterschiedlichen Frequenzbereichen (kHz, MHz, GHz) verfügbar. Ferner enthält der Transponder eine Software, welche die Datenübertragung und -speicherung managt. Diese Software ist auf den Anwendungszweck des Transponders zugeschnitten. Die Dosiervorrichtung wird mit einem passiven Transponder versehen, bei dem die Energieversorgung induktiv durch die Schreib- und/oder Lesevorrichtung erfolgt.

Geeignete RFID-Systeme, Transponder und Schreib- und/oder Lesegeräte werden beispielsweise von den Firmen MBBS SA, Rue de la Gare 5a, CH-2035 Corcelles/Schweiz (Produkt MasterTrace^{™}), PAV Card GmbH, Hamburger Straße 6, 22952 Lütjensee/Germany (Produkt "Scid M") und Datatronic Kodiertechnik GmbH, A-2345 Brunn/Gebirge, Industriestraße B16/BG5 (Produkt "Memor 2000 RFID") zur Verfügung gestellt.

Gemäß einer Ausgestaltung wird das am Anfang des Montageprozesses stehende Produktteil mit dem Transponder versehen, um produktionsbezogene Daten umfassend einzuspeichern. Insbesondere wenn die Dosiervorrichtung mehrere vormontiertc Montagemodule aus mehreren Produktteilen umfaßt, können mehrere Transponder zum Einsatz kommen, die jeweils einem Montagemodul zugeordnet werden, vorzugsweise dem am Anfang des Montageprozesses stehenden Produktteil des jeweiligen Montagemoduls.

Gemäß einer Ausgestaltung wird der Transponder zum Schutz vor mechanischer Beschädigung bzw. Beschädigung durch aggressive Flüssigkeiten oder Gase in der Dosiervorrichtung gekapselt. Hierfür kann er im Inneren eines Gehäuses der Dosiervorrichtung angeordnet oder in ein Kunststoffgehäuse der Dosiervorrichtung eingespritzt sein.

Nach einer Ausgestaltung wird/werden als produktionsbezogene spezifische Daten eine Artikelnummer und/oder eine Seriennummer der Dosiervorrichtung und/oder eine Produktionsauftragsnummer und/oder eine Chargennummer und/oder Produktänderungsdaten im Transponder gespeichert.

Gemäß einer Ausgestaltung werden als produktionsbezogene spezifische Daten die Daten einer Erstkalibrierung im Transponder gespeichert. Diese umfassen als Qualitätssicherungsdaten nach DIN bzw. ISO die folgenden Daten:
- Richtigkeit
- Präzision
- Datum der Erstkalibrierung
- Nummer des Meßplatzcs
- Name/Nummer des Prüfers.

Gemäß einer Ausgestaltung werden als anwendungsbezogene spezifische Daten Vertriebsdaten im Transponder eingespeichert. Gemäß einer weiteren Ausgestaltung umfassen die Vertriebsdaten Kundendaten (z.B. Kundennummer) und/oder das Verkaufsdatum.

Gemäß einer Ausgestaltung werden als anwendungsbezogene spezifische Daten Inventardaten (z.B. Inventarnummer des Anwenders) im Transponder eingespeichert. Dies vereinfacht die Inventarisierung der Dosiervorrichtungen.

Gemäß einer Ausgestaltung werden als anwendungsbezogene spezifische Daten Kalibrationsdaten des Anwenders im Transponder eingespeichert. Diese umfassen als Qualitätssicherungsdaten der Meßmittelüberwachung im Rahmen der Zertifi zierung die folgenden Daten:
- Richtigkeit
- Präzision
- Datum der Kalibrierung
- Nummer des Meßplatzes
- Name/Nummer des Prüfers.

Gemäß einer Ausgestaltung werden als anwendungsbezogene spezifische Daten Benutzungsdaten abgespeichert. Dies können z.B. Daten betreffend die dosierten Fluide einer Kontaminierung und einer Dekontaminierung sein.

Gemäß einer Ausgestaltung werden als anwendungsbezogene spezifische Daten Wartungs- und Reparaturdaten im Transponder eingespeichert. Gemäß einer weiteren Ausgestaltung umfassen diese das Datum der letzten Wartung und/oder Reparatur. Die Reparaturdaten, die einen Fehler und/oder ein ausgetauschtes Teil beschreiben, sind z.B. eine Reparaturkennzahl.

Die produktionsbezogenen und/oder anwendungsbezogenen Daten können ganz oder teilweise unveränderbar und/oder veränderbar im Transponder eingespeichert werden. Gemäß einer bevorzugten Ausgestaltung werden die produktionsbezogenen spezifischen Daten ganz oder teilweise unveränderbar im Transponder gespeichert, da insofern regelmäßig kein Änderungs- und Aktualisierungsbedarf besteht und die Daten hierdurch gesichert werden können. Dasselbe gilt für die Vertriebsdaten. Gemäß einer Ausgestaltung werden die anwendungsspezifischen Daten ganz oder teilweise veränderbar im Transponder gespeichert, weil hier regelmäßig ein Zugriff auf die aktuellsten Daten erforderlich ist und um Speicherplatz zu sparen. Grundsätzlich ist es aber auch möglich, sämtliche Daten unveränderbar zu speichern, um sämtliche Daten umfassend zu dokumentieren, soweit dies die Speicherkapazität erlaubt. Derzeit sind Transponder mit einer Speicherkapazität von 256 Bit bis 1 kByte verfügbar.

Gemäß einer Ausgestaltung werden mittels einer Leseeinrichtung die im Transponder eingespeicherten produktionsbezogenen spezifischen Daten ganz oder teilweise im Produktionsprozeß und/oder bei der Anwendung und/oder die im Transponder eingespeicherten anwendungsbezogenen spezifischen Daten ganz oder teilweise bei der Anwendung ausgelesen. Sowohl im Produktionsprozeß als auch bei der Anwendung sind sämtliche Daten verfügbar, die eingespeichert worden sind.

Es folgen Beispiele für produktionsbezogene und anwendungsbezogene spezifische Daten, die im Rahmen der Erfindung für die Einspeicherung in der Dosiervorrichtung vorgesehen werden können:
1. Produktionsbezogene Daten
   - Artikelnummer
   - Auftragsnummer des Herstellers
   - individuelle Werknummer des Gerätes
   - Qualitätsdaten
   - Zeitpunkt der Kalibrierung
   - Produkt-Änderungsdaten.
2. Vertriebsdaten
   - Kundennummer
   - Verkaufsdatum.
3. Servicedaten
   - Garantiedaten
   - Dokumentation der Reparatur (Zeitpunkt, Teile)
   - Kalibrationsdaten
   - Datum nächster Kalibration (durch den Anwender abrufbar)
4. Anwendungsbezogene Daten des Anwenders
   - spezifische Kalibration des Anwenders
   - Anwenderzuordnung (Person, Bereich, Kostenstelle etc.)
   - Inventarnummer und Daten der Lebenszyklusüberwachung
   - Meßmittelüberwachung im Rahmen der Zertifizierung (Zeitpunkt, Meßwerte, nächster Kalibrationstermin)
   - Benutzungsdaten (z.B. Benutzung in Hochsicherheits- und/oder radioaktiven Bereichen; Daten der Kontaminierung bzw. Dekontaminierung).

## Patentansprüche

1. Verfahren zum Handhaben von Daten einertragbaren Pipette oder eines tragbaren Dispensers, bei dem
- die Pipette oder der Dispenser im Produktionsprozeß mit mindestens einem passiven RFID-Transponder versehen wird, in den Daten mittels einer Schreibeinrichtung berührungslos einspeicherbar und aus dem Daten mittels einer Leseeinrichtung berührungslos auslesbar sind,
- im Produktionsprozeß mittels einer Schreibeinrichtung produktionsbezogene spezifische Daten der Pipette oder des Dispensers in den passiven RFID-Transponder eingespeichert werden,
- bei der Anwendung mittels einer Schreibeinrichtung anwendungsbezogene spezifische Daten der Pipette oder des Dispensers in den passiven RFID-Transponder eingespeichert werden,
als anwendungsbezogene spezifische Daten einen Fehler und/oder ein ausgetauschtes Teil beschreibende Reparaturdaten in den passiven RFID-Transponder eingespeichert werden.

2. Verfahren nach Anspruch 1, bei dem das Einspeichern der anwendungsbezogenen Daten den nächsten Kalibrationstermin umfasst.

3. Verfahren nach Anspruch 1 oder 2, bei dem der passive Transponder in der Pipette oder in dem Dispenser gekapselt wird.

4. Verfahren nach einem der Ansprüche 1 bis 3, bei dem als produktionsbezogene spezifische Daten eine Artikelnummer und/oder eine Seriennummer der Dosiervorrichtung und/oder eine Produktionsauftragsnummer und/oder eine Chargennummer in denpassiven Transponder eingespeichert wird/werden.

5. Verfahren nach einem der Ansprüche 1 bis 4, bei dem als anwendungsbezogene spezifische Daten Vertriebsdaten in den passiven Transponder eingespeichert werden.

6. Verfahren nach einem der Ansprüche 1 bis 5, bei dem als anwendungsbezogene spezifische Daten Inventardaten des Anwenders und/oder Benutzungsdaten in den passiven Transponder eingespeichert werden.

7. Verfahren nach einem der Ansprüche 1 bis 6, bei dem die produktionsbezogenen spezifischen Daten ganz oder teilweise unveränderbar im passiven Transponder gespeichert werden und/oder
- bei dem die anwendungsbezogenen spezifischen Daten ganz oder teilweise veränderbar im passiven Transponder gespeichert werden.

8. Verfahren nach einem der Ansprüche 1 bis 7, bei dem mittels einer Lesecinrichtung die im passiven Transponder gespeicherten produktionsbezogenen spezifischen Daten ganz oder teilweise im Produktionsprozeß und/oder bei der Anwendung und/oder die im passiven Transponder gespeicherten anwendungsbezogenen spezifischen Daten ganz oder teilweise bei der Anwendung ausgelesen werden.

## Claims

1. A method for handling data of a portable pipette or of a portable dispenser wherein
- the pipette or the dispenser, in the production process, is provided with at least one passive RFID-transponder into which data can be contactlessly stored by means of a writing device and from which data can be contactlessly read out by means of a reading device,
- production-related specific data of the pipette or the dispenser is stored, in the production process, into the passive RFID-transponder by means of a writing device, and
- if applied, application-related specific data of the pipette or the dispenser are stored into the passive RFID-transponder by means of a writing device,
- application-related specific data of the pipette or of the dispenser are stored in the passive RFID-transponder during application and,
an error and/or repair data describing an exchanged part are stored as application-related specific data in the passive RFID-transponder.

2. The method as claimed in claim 1, wherein the storing of application-related data comprises the next calibration date.

3. The method as claimed claim 1 or 2 wherein the passive transponder is encapsulated in the pipette or in the dispenser.

4. The method as claimed in any one of claims 1 to 3 wherein an article number and/or a serial number of the proportioning device and/or a production order number and/or a batch number is/are stored into the passive transponder as production-related specific data.

5. The method as claimed in any one of claims 1 to 4 wherein sales data are stored into the passive transponder as application-related specific data.

6. The method as claimed in any one of claims 1 to 5 wherein inventory data of the user and/or usage data are stored into the passive transponder as application-related specific data.

7. The method as claimed in any one of claims 1 to 6 wherein the production-related specific data are stored to be fully or partially invariable into the passive transponder and/or
- wherein the application-related specific data are stored to be fully or partially variable into the passive transponder.

8. The method as claimed in any one of claims 1 to 7 wherein the production-related specific data stored in the passive transponder are read out fully or partially in the production process and/or during application and/or the application-related specific data stored in the passive transponder are read out fully or partially during application, by means of a reading device.

## Revendications

1. Procédé de gestion de données d'une pipette portative ou d'un dispenser portatif, dans lequel
• dans le processus de production, la pipette ou le dispenser est pourvu d'au moins un transpondeur RFID passif auquel des données peuvent être mises en mémoire sans contact par le biais d'un dispositif d'écriture, et duquel des données peuvent être extraites sans contact par le biais d'un dispositif de lecture,
• dans le processus de production, des données spécifiques de la pipette ou du dispenser concernant la production sont mises en mémoire au transpondeur RFID passif par le biais d'un dispositif d'écriture,
• dans l'utilisation, des données spécifiques de la pipette ou du dispenser concernant l'utilisation sont mises en mémoire au transpondeur RFID passif par le biais d'un dispositif d'écriture,
• des données de réparation décrivant une erreur et/ou une pièce remplacée sont mises en mémoire au transpondeur RFID passif comme des données spécifiques concernant l'utilisation.

2. Procédé selon la revendication 1, dans lequel la mise en mémoire des données concernant l'utilisation comprend la prochaine date de calibration.

3. Procédé selon la revendication 1 ou 2, dans lequel le transpondeur passif est encapsulé dans la pipette ou dans le dispenser.

4. Procédé selon l'une quelconque des revendications 1 à 3, dans lequel un numéro de produit et/ou un numéro de série du dispositif de dosage et/ou un numéro d'ordre de production et/ou un numéro de charge est/sont mis en mémoire dans le transpondeur passif comme données spécifiques concernant la production.

5. Procédé selon l'une quelconque des revendications 1 à 4, dans lequel des données de distribution sont mises en mémoire dans le transpondeur passif comme des données spécifiques concernant l'utilisation.

6. Procédé selon l'une quelconque des revendications 1 à 5, dans lequel des données d'inventaire de l'utilisateur et/ou données d'utilisation sont mises en mémoire dans le transpondeur passif comme des données spécifiques concernant l'utilisation.

7. Procédé selon l'une quelconque des revendications 1 à 6, dans lequel les données spécifiques concernant la production sont mises en mémoire dans le transpondeur passif d'une manière entièrement ou partiellement invariable, et/ou
• dans lequel les données spécifiques concernant l'utilisation sont mises en mémoire dans le transpondeur passif d'une manière entièrement ou partiellement variable.

8. Procédé selon l'une quelconque des revendications 1 à 7, dans lequel par le biais d'un dispositif de lecture, les données spécifiques concernant la production mises en mémoire dans le transpondeur passif sont entièrement ou partiellement extraites dans le processus de production et/ou dans l'utilisation, et/ou les données spécifiques concernant l'utilisation mises en mémoire dans le transpondeur passif sont entièrement ou partiellement extraites dans l'utilisation.
